# EUROPEAN PATENT SPECIFICATION

(11) **EP 3 293 209 B1**
(45) Date of publication and mention of the grant of the patent: **14.08.2019**
(21) Application number: 16188329.3
(22) Date of filing: 12.09.2016
(51) Int. Cl.: C08F 2/00, B01J 19/00, C08F 2/01, C08F 2/12, C08F 2/18, C08J 5/18, C08L 23/04, C08L 23/06

(54) **MULTIMODAL POLYETHYLENE THIN FILM**
MULTIMODALE POLYETHYLENDÜNNSCHICHT
FILM MINCE DE POLYÉTHYLÈNE MULTIMODAL

(43) Date of publication of application: 14.03.2018
(73) Proprietor: Thai Polyethylene Co., Ltd., 10800 Bangkok (TH); SCG Chemicals Co., Ltd., Bangkok 10800 (TH)
(72) Inventor: ARUNSRI, Mattayan, Bangkok 10800 (TH); SARANYA, Traisilanum, 10800 Bangkok (TH); WATCHAREE, Cheevasrirungruang, 10800 Bangkok (TH); WARACHAD, Klomkamol, 10800 Bangkok (TH)
(74) Representative: Scholz, Volker

(56) References cited:
- WO-A1-2008/049551
- US-B1- 6 713 561

## Description

The present invention relates to a multimodal polyethylene composition and to a film comprising said multimodal polyethylene composition.

The demand of polyethylene resins is increasingly being used in a variety of applications. As required high performance of polyethylene for a relatively new plastic, a polymerization process technology has been developed to support new polymeric material production. In order for balancing processability and physical properties of ethylene copolymers, the development in multimodal polymerization process has been investigated.

In the prior art, multimodal polyethylene polymerization is employed to produce polymers having different molecular weights by creating each resin fraction in separated reactors. A low molecular weight fraction is produced in a reactor using an excess of hydrogen to control the molecular weight of the polymer suitable for providing good processability of the final polymer. A high molecular weight fraction which has an influence on the physical properties and is produced under polymerization conditions with low hydrogen concentration. It is well known in the art that low molecular weight polymer is preferably produced in a first reactor. To obtain a multimodal polymer with good physical properties, all hydrogen from the first reactor should be removed before the polymerized slurry polymer is passed to a second reactor in which the production of high molecular weight polymer takes place.

US2010/0092709 A1 describes a process for preparing bimodal polyethylene copolymers. The polymerization in a second reactor is operated at a high temperature with a low comonomer-to-ethylene-ratio and low hydrogen-to-ethylene-ratio to obtain resins having improved stress crack resistance and melt strength.

US 6,716,936 B1 describes a process for producing bimodal polyethylene copolymers. A second reactor is operated under hydrogen depleted polyethylene polymerization by directing a polyethylene slurry stream from a first reactor to a hydrogen removal system. Polymerization in both the first and the second reactors is operated at the bubble point by using propane or isobutane as a light solvent. The process is suitable for the production of a bimodal polyethylene for highly homogeneous high molecular weight resins.

US 6,291,601 B1 describes a process for producing a bimodal copolymer with relatively high molecular weight polyethylene. A hydrogenation catalyst is introduced into a second reactor to consume residual hydrogen gas from first reactor by converting hydrogen into ethane leading to a low hydrogen concentration in the second reactor. Using this technique, the cost of raw material consumption of both hydrogen and ethylene are increased due to converting of unreacted gases.

US 2003/0191251 A1 discloses a process for removing residual hydrogen from a polymer slurry by using two flash drums placed between cascade reactors which use light solvent as a diluent. The addition of make-up solvent to the first flash drum outlet is required to prevent a slurry transfer pump blocking. Furthermore, warm make-up solvent is necessary before transferring slurry into the next flash drum.

EP 1 655 334 A1 discloses the multimodal production of an ethylene polymer which is produced in a multistage process with a MgCl₂-based Ziegler-Natta catalyst. The polymerization stages are performed in the following order to achieve firstly a ultra high molecular weight polymer, followed by achieving a low molecular weight polymer, and finally achieving high molecular weight polymer in the last step. The polymerization catalyst is charged to a prepolymerization step to make an ultrahigh molecular weight fraction.

WO 2013/144328 describes a composition of multimodal high density polyethylene which is produced using a Ziegler-Natta catalyst for use in molding applications. A small fraction of ultrahigh polyethylene of less than 15 % by weight is produced in a third reactor.

US 2009/0105422 A1 describes a process for producing a multimodal polyethylene. The polymerization is carried out in three cascade reactors, wherein the molecular weight of the polymer in each reactor is controlled by the presence of hydrogen. The concentration of the hydrogen in each reactor is reduced subsequently by providing the highest hydrogen concentration in the first reactor and the lowest hydrogen concentration in the third reactor.

WO 2013/113797 describes a process for polyethylene preparation comprising three main subsequent steps of polymerized ethylene and at least one other α-olefin to get the polyethylene with, respectively, a lower molecular weight ethylene polymer, a first higher molecular weight ethylene polymer and a second higher molecular weight ethylene polymer in accordance with the sequence of a first reactor, a second reactor and a third reactor.

Even though many processes for preparing multimodal polyethylene are known and have been described, there is still a need for developing new processes for multimodal polymerization, particularly for further improving the mechanical properties of polyethylene compositions.

Therefore, it is the object of the present invention to provide a reactor system and a process for preparing multimodal polyethylenes overcoming drawbacks of the prior art, in particular to enhance the performance of a hydrogen removal unit comprised in such a reactor.

It is an further object to provide a multimodal polyethylene composition overcoming drawbacks of the prior art, in particular having improved mechanical properties, such as Charpy index.

A variety of films, which may be applied as the single layer or to the core or the surface of the multi-layer films, are known in the art. Likewise, a variety of polymer compositions, in particular polyethylene compositions, for producing such films are described.

WO 2013/144324 A1 discloses a polymer composition comprising a homopolymer, a first copolymer and a second copolymer of specific MFR₅, density and molecular weight distribution. The polymer composition is prepared in a process involving a slurry loop reactor and two gas phase reactors.

WO 2006/092378 A1 discloses a film prepared from a polymer composition having a specific MFR₅ and density and comprising three constituents, namely a homopolymer and two different copolymers.

US 2015/0051364 A1 is related to a multimodal polyethylene copolymer comprising at least three components and having a specific density and MFR₂₁. At least one of the three components is a copolymer.

US 2010/0016526 A1 is related to a thin film which may be produced from bimodal HDPE polymer having specific density. The composition is prepared by a two stage cascade polymerization with series using a mixed catalyst system.

WO 2008/049551 A1 discloses a multimodal polyethylene molding composition for producing pipes.

US 6,716,936 B1 discloses cascade boiling pool slurry reactors for producing bimodal low to medium density polyethylene polymers.

However, in light of the above prior art, there is still a need to provide multimodal polyethylene compositions for preparing films and films prepared by using multimodal polyethylene compositions overcoming drawbacks of the prior art, in particular high density polyethylene compositions for blown film with improved properties regarding high output, good bubble stability, high mechanical strength and high toughness at film thicknesses from 4 to 40 micron or, preferably, less.

Therefore, it is the further object of the present invention to provide multimodal polyethylene compositions for preparing films and films prepared this way overcoming drawbacks of the prior art, in particular overcoming the drawbacks mentioned above.

This object is achieved in accordance with the invention according to the subject-matter of the independent claims. Preferred embodiments result from the sub-claims.

Described herein is a reactor system for a multimodal polyethylene polymerization process, comprising;
(a) a first reactor;
(b) a hydrogen removal unit arranged between the first reactor and a second reactor comprising at least one vessel connected with a depressurization equipment, preferably selected from vacuum pump, compressor, blower, ejector or a combination thereof, the depressurization equipment allowing to adjust an operating pressure to a pressure in a range of 100 - 200 kPa (abs);
(d) the second reactor; and
(e) a third reactor.

Preferably, the depressurization equipment allows to adjust the operating pressure in the hydrogen removal unit to a pressure in the range of 103 - 145 kPa (abs), preferably 104 -130 kPa (abs), most preferably 105 to 115 kPa (abs).

Preferably, the hydrogen removal unit further contains a stripping column for the separation of hydrogen and a liquid diluent.

Further described herein is a process for producing a multimodal polyethylene composition in an reactor system described above, comprising (in this sequence);
(a) polymerizing ethylene in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene or medium molecular weight polyethylene;
(b) removing in the hydrogen removal unit 98.0 to 99.8 % by weight of the hydrogen comprised in a slurry mixture obtained from the first reactor at a pressure in the range of 103-145 kPa (abs) and transferring the obtained residual mixture to the second reactor;
(c) polymerizing ethylene and optionally C₄ to C₁₂ α-olefin comonomer in the second reactor in the presence of a catalyst system, selected from Ziegler-Natta catalyst or metallocene, and in the presence of hydrogen in an amount obtained in step (b) to obtain a first high molecular weight polyethylene or a first ultra high molecular weight polyethylene in the form of a homopolymer or a copolymer and transferring a resultant mixture to the third reactor; and
(d) polymerizing ethylene and optionally C₄ to C₁₂ α-olefin comonomer in the third reactor in the presence of a catalyst system, selected from Ziegler-Natta catalyst or metallocene, and hydrogen the amount of hydrogen in the third reactor is in a range of 0.1-70% by mol, preferably 1-60% by mol, with respect to the total gas present in the vapor phase in the third reactor or optionally substantial absence of hydrogen to obtain a second high molecular weight polyethylene or a second ultra high molecular weight polyethylene in the form of a homopolymer or a copolymer.

"Substantial absence" in this regard means that hydrogen is only comprised in the third reactor in an amount which cannot be avoided by technical means.

The slurry mixture obtained from the first reactor and subjected to the step of removing hydrogen in the hydrogen removal unit contains all of the solid and liquid constituents obtained in the first reactor, in particular the low molecular weight polyethylene or the medium molecular weight polyethylene. Furthermore, the slurry mixture obtained from the first reactor is saturated with hydrogen regardless the amount of hydrogen used in the first reactor.

Preferably, the removing is removing of 98.0 to 99.8 % by weight of the hydrogen, and more preferable 98.0 to 99.5 % by weight, most preferred 98.0 to 99.1% by weight.

Preferably, the α-olefin comonomer comprised in the second reactor and/or in the third reactor is selected from 1-butene and/or 1-hexene.

Preferably, the operation pressure in the hydrogen removal unit is in the range of 103-145kPa (abs) and more preferably 104-130 kPa (abs), most preferred 105 to 115 kPa (abs).

The weight average molecular weight (Mw) of the low molecular weight polyethylene, the medium molecular weight polyethylene, the high molecular weight polyethylene and the ultra high molecular weight polyethylene described herein are in the range of 20,000-90,000 g/mol (low), more than 90,000-150,000 g/mol (medium), more than 150,000-1,000,000 g/mol (high) and more than 1,000,000-5,000,000 g/mol (ultra high) respectively.

The above object is achieved by a multimodal polyethylene composition obtainable by a process for producing a multimodal polyethylene composition comprising;
(a) polymerizing ethylene in the absence of comonomer in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene homopolymer, having a weight average molecular weight (Mw) of 20.000 to 90.000 g/mol, having a density of ≥ 0.965 g/cm³, having a MI₂ according to ASTM D 1238 of 500 to 1.000 g/10 min, or medium molecular weight polyethylene homopolymer, having a weight average molecular weight (Mw) of more than 90.000 to 150.000 g/mol, having a density of ≥ 0.965 g/cm³, having a MI₂ according to ASTM D1238 from 0.1 to 10 g/10 min,
(b) removing in the hydrogen removal unit 98.0 to 99.8% by weight of the hydrogen comprised in a slurry mixture obtained from the first reactor at a pressure in the range of 103-145 kPa (abs) and transferring the obtained residual mixture to the second reactor;
(c) polymerizing ethylene and optionally C₄ to C₁₂ α-olefin comonomer in the second reactor in the presence of a catalyst system, selected from Ziegler-Natta catalyst or metallocene, and in the presence of hydrogen in an amount obtained in step (b) to obtain a first high molecular weight polyethylene, having a weight average molecular weight (Mw) of more than 150.000 to 1.000.000 g/mol, or a first ultra high molecular weight polyethylene, having a weight average molecular weight (Mw) of more than 1.000.000 to 5.000.000 g/mol, in the form of a homopolymer or a copolymer and transferring a resultant mixture to the third reactor; and
(d) polymerizing ethylene, and optionally C₄ to C₁₂ α-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol with respect to the total gas present in the vapor phase in the third reactor or optionally substantial absence of hydrogen to obtain a second high molecular weight polyethylene, having a weight average molecular weight (Mw) of more than 150.000 to 1.000.000 g/mol, or a second ultra high molecular weight polyethylene, having a weight average molecular weight (Mw) of more than 1.000.000 to 5.000.000 g/mol, in the form of a homopolymer or copolymer, in a reactor system for a multimodal polyethylene polymerization process, comprising;
   (1) a first reactor, wherein the temperature in the first reactor ranges from 65 to 90°C and the first reactor is operated at a pressure between 250 and 900 kPa;
   (2) a hydrogen removal unit arranged between the first reactor and a second reactor comprising at least one vessel connected with a depressurization equipment, preferably selected from vacuum pump, compressor, blower, ejector or a combination thereof, the depressurization equipment allowing to adjust an operating pressure to a pressure in a range of 100 - 200 kPa (abs);
   (3) the second reactor; and
   (4) a third reactor,
the multimodal polyethylene composition comprising;
(A) 40 to 65 percent by weight, preferably 43 to 52 percent by weight, most preferred 44 to 50 percent by weight, of the low molecular weight polyethylene, the low molecular weight polyethylene;
(B) 8 to 20 percent by weight, preferably 10 to 18 percent by weight, most preferred 10 to 15 percent by weight, of the first high molecular weight polyethylene or the first ultra high molecular weight polyethylene; and
(C) 30 to 50 percent by weight, preferably 37 to 47 percent by weight, most preferred 39 to 45 percent by weight, of the second high molecular weight polyethylene or the second ultra high molecular weight polyethylene, wherein
the density of the first high molecular weight polyethylene or the first ultra high molecular weight polyethylene and the second high molecular weight polyethylene or the second ultra high molecular weight polyethylene are in the range from 0.920 to 0.950 g/cm³, and
wherein the molecular weight distribution of the multimodal polyethylene composition is from 20 to 28, preferably from 24 to 28, measured by gel permeation chromatography.

In a preferred embodiment, the multimodal polyethylene composition has a weight average molecular weight from 150,000 to 400,000 g/mol, preferably from 200,000 to 350,000 g/mol, measured by Gel Permeation Chromatography.

Furthermore, it is preferred, that the multimodal polyethylene composition has a number average molecular weight from 5,000 to 15,000 g/mol, preferably from 7,000 to 12,000 g/mol, measured by Gel Permeation Chromatography.

Preferably, the multimodal polyethylene composition has a Z average molecular weight from 1,000,000 to 3,000,000 g/mol, preferably from 1,000,000 to 2,500,000 g/mol, measured by Gel Permeation Chromatography.

Preferably, the multimodal polyethylene composition has a density from 0.950 to 0.962 g/cm³ preferably from 0.953 to 0.959 g/cm³, according to ASTM D 1505 and/or a melt flow index MI₅ from 0.01 to 50 g/10 min, and/or MI₂ from 0.03 to 0.15 g/10 min preferably from 0.03 to 0.10 g/10 min.

Finally, the object is achieved by a film comprising the inventive multimodal polyethylene composition, wherein the film has a thickness of 4 to 40 µm, preferably 4 to 30 µm, and most preferably 4 to 20 µm.

In preferred embodiments of the inventive reactor system, the inventive process, the inventive multimodal polyethylene composition and inventive film "comprising" is "consisting of'.

Regarding the inventive film, it is preferred that the film substantially comprises the inventive multimodal polyethylene composition, which means that the film does comprise further constituents only in amounts which do not affect the film properties regarding output, bubble stability, mechanical strength, toughness and the like. Most preferred the film is consisting of the inventive multimodal polyethylene composition.

In preferred embodiments "parts by weight" is "percent by weight".

The above embodiments mentioned to be preferred resulted in even more improved mechanical properties of the obtained multimodal polyethylene composition and the film prepared therefrom. Best results were achieved by combining two or more of the above preferred embodiments. Likewise, the embodiments mentioned above to be more or most preferred resulted in the best improvement of mechanical properties.

Surprisingly, it was found that by using the inventive reactor system to produce an inventive multimodal polyethylene composition by the inventive process allows to form an inventive film using the inventive composition which is superior over the prior art. In particular, it was found that by using the inventive multimodal polyethylene composition a blown film can be prepared with high output, good bubble stability, high mechanical strength and high toughness, in particular at a film thickness from 5 to 12 micron.

The invention concerns a reactor system for multimodal polyethylene polymerization. The system comprises a first reactor, a second reactor, a third reactor and a hydrogen removal unit placed between the first reactor and the second reactor.

The hydrogen depleted polyethylene from the first reactor affects the polymerization of high molecular weight in the subsequent reactors. In particular, high molecular weight leads to improved mechanical properties of polyethylene that is the advantage for various product application includes injection molding, blow molding and extrusion.The catalyst for producing the multimodal polyethylene resin of this invention is selected from a Ziegler-Natta catalyst, a single site catalyst including metallocene-bases catalyst and non- metallocene-bases catalyst or chromium based might be used, preferably conventional Ziegler-Natta catalyst or single site catalyst. The catalyst is typically used together with cocatalysts which are well known in the art.

Innert hydrocarbon is preferably aliphatic hydrocarbon including hexane, isohexane, heptane, isobutane. Preferably, hexane (most preferred n-hexane) is used. Coordination catalyst, ethylene, hydrogen and optionally α-olefin comonomer are polymerized in the first reactor. The entire product obtained from the first reactor is then transferred to the hydrogen removal unit to remove 98.0 to 99.8% by weight of hydrogen, unreacted gas and some volatiles before being fed to the second reactor to continue the polymerization. The polyethylene obtained from the second reactor is a bimodal polyethylene which is the combination of the product obtained from the first reactor and that of the second reactor. This bimodal polyethylene is then fed to the third reactor to continue the polymerization. The final multimodal (trimodal) polyethylene obtained from the third reactor is the mixture of the polymers from the first, the second and the third reactor.

The polymerization in the first, the second and the third reactor is conducted under different process conditions. These can be the variation and concentration of ethylene and hydrogen in the vapor phase, temperature or amount of comonomer being fed to each reactor. Appropriate conditions for obtaining a respective homo- or copolymer of desired properties, in particularly of desired molecular weight, are well known in the art. The person skilled in the art is enabled on basis of his general knowledge to choose the respective conditions on this basis. As a result, the polyethylene obtained in each reactor has a different molecular weight. Appropriate conditions for obtaining a respective homo- or copolymer of desired properties, in particularly of desired molecular weight, are well known in the art. The person skilled in the art is enabled on basis of his general knowledge to choose the respective conditions on this basis. Preferably, low molecular weight polyethylene is produced in the first reactor, while ultra high or and molecular weight polyethylene are produced in the second and third reactor, respectively.

The term first reactor refers to the stage where the low molecular weight polyethylene (LMW) or the medium molecular weight polyethylene (MMW) is produced. The term second reactor refers to the stage where the first high or ultra high molecular weight polyethylene (HMW1) is produced. The term third reactor refers to the stage where the second high or ultra high molecular weight polyethylene (HMW2) is produced.

The term LMW refers to the low molecular weight polyethylene polymer polymerized in the first reactor having a the weight average molecular weight (Mw) of 20,000-90,000 g/mol.

The term MMW refers to the medium molecular weight polyethylene polymer polymerized in the first reactor having a number average molecular weight (Mn) of 9,000 to 12,000 g/mol and a weight average molecular weight (Mw) of more than 90,000 to 150,000 g/mol.

The term HMW1 refers to the high or ultra high molecular weight polyethylene polymer polymerized in the second reactor having a weight average molecular weight (Mw) of more than 150,000 to 5,000,000 g/mol.

The term HMW2 refers to the high or ultra high molecular weight polyethylene polymer polymerized in the third reactor having a weight average molecular weight (Mw) of more than 150,000 to 5,000,000 g/mol.

The LMW or MMW is produced in the first reactorin the absence of comonomer in order to obtain a homopolymer.

To obtain the improved polyethylene properties of this invention, ethylene is polymerized in the first reactor in the absence of comonomer in order to obtain high density LMW or MMW polyethylene having density ≥0.965 g/cm³ and MI₂ in the range of 10-1000 g/10min for LMW and 0.1 to 10 g/10 min for MMW. In order to obtain the target density and MI in the first reactor, the polymerization conditions are controlled and adjusted. The temperature in the first reactor ranges from 65-90°C, preferably 68-85°C. Hydrogen is fed to the first reactor so as to control the molecular weight of the polyethylene. The molar ratio of hydrogen to ethylene in the vapor phase can be varied depending up on the target MI. However, the preferred molar ratio ranges from 0.5-8.0, more preferably 3.0-6.0. The first reactor is operated at pressure between 250 and 900 kPa, preferably 400-850 kPa. An amount of hydrogen present in the vapor phase of the first reactor is in the range of 20-95% by mole, preferably 50-90% by mol.

Before being fed to the second reactor, the slurry obtained from the first reactor containing LMW or MMW polyethylene preferably in hexane is transferred to a hydrogen removal unit which may have a flash drum connected with depressurization equipment preferably including one or the combination of vacuum pump, compressor, blower and ejector where the pressure in the flash drum is reduced so that volatile, unreacted gas, and hydrogen are removed from the slurry stream. The operating pressure of the hydrogen removal unit typically ranges from 103-145 kPa (abs), preferably 104-130 kPa (abs) in which 98.0 to 99.8% by weight of hydrogen can be removed, preferably 98.0 to 99.5% by weight.

In this invention, when 98.0 to 99.8% by weight of hydrogen is removed and the polymerization undergoes under these conditions of hydrogen content, very high molecular weight polymer can be achieved this way and Charpy Impact and Flexural Modulus are improved. It was surprisingly found that working outside the range of 98.0 to 99.8% by weight of hydrogen removal, the inventive effect of obtaining very high molecular weight polymer and improving Charpy Impact an Flexural Modulus could not be observed to the same extend. The effect was more pronounced in the ranges mentioned to be preferred.

The polymerization conditions of the second reactor are notably different from that of the first reactor. The temperature in the second reactor ranges from 70-90°C, preferably 70-80°C. The molar ratio of hydrogen to ethylene is not controlled in this reactor since hydrogen is not fed into the second reactor. Hydrogen in the second reactor is the hydrogen left over from the first reactor that remains in slurry stream after being flashed at the hydrogen removal unit. Polymerization pressure in the second reactor ranges from 100-3000 kPa, preferably 150-900 kPa, more preferably 150-400 kPa and is controlled by the addition of inert gas such as nitrogen.

Hydrogen removal is the comparison result of the amount of the hydrogen present in the slurry mixture before and after passing through the hydrogen removal unit. The calculation of hydrogen removal is performed according to the measurement of gas composition in the first and the second reactor by gas chromatography.

After the substantial amount of hydrogen is removed to achieve the inventive concentration, slurry from the hydrogen removal unit is transferred to the second reactor to continue the polymerization. In this reactor, ethylene can be polymerized with or without α-olefin comonomer to form HMW1 polyethylene in the presence of the LMW or MMW polyethylene obtained from the first reactor. The α-olefin comomer that is useful for the copolymerization includes C₄₋₁₂, preferably 1-butene and/or 1-hexene, more preferably 1-butene.

After the polymerization in the second reactor, the slurry obtained is transferred to the third reactor to continue the polymerization.

The HMW2 is produced in the third reactor by copolymerizing ethylene with optionally α-olefin comonomer at the presence of LMW and HWM1 obtained from the first and second reactor. The α-olefin comonomer that is useful for the copolymerization include C₄₋₁₂, preferably 1-butene and/or 1-hexene, more preferably 1-butene.

In order to obtain the target density and the target MI in the third reactor, the polymerization conditions are controlled and adjusted. However, the polymerization conditions of the third reactor are notably different from the first and second reactor. The temperature in the third reactor ranges from 68-90°C preferably 68-80°C. Hydrogen is fed to the third reactor so as to control the molecular weight of polyethylene. The molar ratio of hydrogen to ethylene can be varied depending up on the target MI. However, the preferred molar ratio ranges from 0.01-2.0. Polymerization pressure in the third reactor ranges from 150-900 kPa, preferably 150-400 kPa, and is controlled by the addition of inert gas such as nitrogen.

The amount of LMW present in the multimodal polyethylene composition of the present invention is 40-65 parts by weight. HMW1 present in the polyethylene of the present invention is 8-20 parts by weight and HMW2 present in the polyethylene of the present invention is 30-50 parts by weight.

The final (free-flow) multimodal polyethylene composition is obtained by separating hexane from the slurry discharged from the third reactor.

The resultant polyethylene powder may then be mixed with antioxidants and optionally additives before being extruded and granulated into pellets.

The pellets was then blown into a film using the conventional tubular blow film process with different thickness and further evaluated for the film properties.

### Definition and Measurement Methods

MI₂, MI₅, MI_{21.6}: Melt flow index (MFR) of polyethylene was measured according to ASTM D 1238 and indicated in g/10 min that determines the flowability of polymer under testing condition at 190°C with load 2.16 kg, 5 kg and 21.6 kg, respectively.

Density: Density of polyethylene was measured by observing the level to which a pellet sinks in a liquid column gradient tube, in comparison with standards of known density. This method is determination of the solid plastic after annealing at 120 °C follow ASTM D 1505.

Molecular weight and Polydispersity index (PDI): The weight average molecular weight (Mw), the number average molecular weight (Mn) and the Z average molecular weight (M_{Z}) in g/mol were analysed by gel permeation chromatography (GPC). Polydispersity index was calculated by Mw/Mn.

Around 8 mg of sample was dissolved in 8 ml of 1,2,4-trichlorobenzene at 160°C for 90 min. Then the sample solution, 200 µl, was injected into the high temperature GPC with IR5, an infared detector (Polymer Char, Spain) with flow rate of 0.5 ml/min at 145°C in column zone and 160°C in detector zone. The data was processed by GPC One® software, Polymer Char, Spain.

### Intrinsic Viscosity (IV)

The test method covers the determination of the dilute solution viscosity of HDPE at 135 °C or Ultra High Molecular Weight Polyethylene (UHMWPE) at 150°C. The polymeric solution was prepared by dissolving polymer in Decalin with 0.2% wt/vol stabilizer (Irganox 1010 or equivalent). The details are given for the determination of IV followed ASTM D2515.

Crystallinity: The crystallinity is frequently used for characterization by Differential Scanning Calorimetry (DSC) follow ASTM D 3418. Samples were identified by peak temperature and enthalpy, as well as the % crystallinity was calculated from the peak area.

Charpy impact strength: Charpy impact strength is determined according to ISO179 at 23°C, 0°C and -20°C and showed in the unit kJ/m².

Flexural Modulus: The specimen was prepared and performed the test according to ISO178. The flexural tests were done using a universal testing machine equipped with three point bending fixture.

Film bubble stability : It was determined during the blown film process, the axial oscillation of the film bubble was observed during increasing the nip roll take up speed and continue more than 30 minute. Good bubble stability is defined when film is not oscillating and bubble is not break.

Output: The film was blown following the blown film conditions. Then the film was collected for a minute and weight. The output of film from unit of g/min is then calculated and reported in the unit of kg/hr.

Dart drop impact: This test method follow method A of ASTM D1709 that covers the determination of the energy that cause plastic film to fail under specified conditions of free-falling dart impact. This energy is expressed in terms of the weight of the falling from a specified height, 0.66 ± 0.01 m, which result in 50% failure of specimens tested.

Puncture: This testing is in-housed method that a specimen is clamped without tension between circular plates of a ring clamp attachment in UTM. A force is exerted against the center of the unsupported portion of the test specimen by a solid steel rod attached to the load indicator until rupture of specimen occurs. The maximum force recorded is the value of puncture resistance

Tensile and elongation properties of film: The test methods cover the determination of tensile properties of film (less than 1.0 mm. in thickness) followed ASTM D882. The testing employs a constant rate of grip separation, 500 mm/min.

Tear strength : This test method covers the determination of the average force to propagate tearing through a specified length of plastic film using an Elmendorf-type tearing tester followed ASTM D 1922

Melt strength and Draw down ratio (DD) : They are determined using GOEFFERT Rheotens. The melt extrudate is performed by single screw extruder with 2mm die diameter at melt temperature 190oC.the extrudate pass through Rheotens haul-off with controlled the ramp speed. The haul-off force is record. The force(N) is collect as a function of draw ratio(DD). Melt strength and draw down ratio is define as the force at break and draw down ratio at break respectively .

### Experimental and examples

### Composition related examples

The medium or high density polyethylene preparation was carried out in three reactors in series. Ethylene, hydrogen, hexane, catalyst and TEA (triethyl aluminum) co-catalyst were fed into a first reactor in the amounts shown in Table 1. A high activity Ziegler-Natta catalyst was used. The catalyst preparation is for example described in Hungarian patent application 0800771R . The polymerization in first reactor was carried out to make a low molecular weight polyethylene. All of polymerized slurry polymer from first reactor was then transferred to a hydrogen removal unit to remove unreacted gas and some of hexane from polymer. The operating pressure in the hydrogen removal unit was be varied in a range of 100 to 115 kPa where residual hydrogen was removed more than 98 % by weight but not more than 99.8 % by weight from hexane before transferring to a second polymerization reactor. Some fresh hexane, ethylene and/or comonomer were fed into second reactor to produce first high molecular weight polyethylene (HMW1). All of polymerized polymer from second reactor was fed into the third reactor which produce second high molecular weight polyethylene (HMW2). Ethylene, comonomer, hexane and/or hydrogen were fed into the third reactor.

Comparative Example 1 (CE1)A homopolymer was produced in first reactor to obtain a low molecular weight portion before transferring such polymer to hydrogen removal unit. Reactant mixture was introduced into the hydrogen removal unit to separate the unreacted mixture from the polymer. Residual hydrogen was removed 97.6% by weight when hydrogen removal unit was operated at pressure of 150 kPa. The low molecular weight polymer was then transferred to the second reactor to produce a first high molecular weight polymer. Final, produced polymer from second reactor was transferred to the third reactor to create a second high molecular weight polymer. In third, a copolymerization was carried out by feeding 1-butene as a comonomer.

### Example 1 (E1) (not in accordance with the invention)

Example 1 was carried out in the same manner as Comparative Example 1 except that the hydrogen removal unit was operated at pressure of 115 kPa. The residual of hydrogen from first reactor was removed 98.0% by weight. Characteristic properties of these multimodal polymers are shown in Table 2. As it can be seen, an improvement of stiffness-impact balance was observed when the percentage of removed hydrogen residual increased compared with the properties of Comparative Example 1.

### Example 2 (E2) (not in accordance with the invention)

Example 2 was carried out in the same manner as Comparative Example 1 except that the hydrogen removal unit was operated at pressure of 105 kPa. The residual hydrogen from the first reactor was removed to an extend of 99.1% by weight. The operational of hydrogen removal unit under this pressure leads to an expansion of a polymer properties range. As seen in Table 2, a final melt flow rate of E2 was lower than a final melt flow rate of CE1 resulted in an improvement of Charpy impact while still maintained the flexural modulus.

### Comparative Example 2 (CE2)

Comparative Example 2 was carried out in the same manner as Comparative Example 1 except that the hydrogen removal unit was operated at pressure of 102 kPa. The residual of hydrogen from first reactor was removed to an extend of 99.9% by weight. The operational of hydrogen removal unit under this pressure leads to an expansion of a polymer properties range. As seen in Table 2, the final melt flow rate and a density of CE2 were quite similar to a final melt flow rate and a density of E2. A decay of Charpy impact was showed in CE2 compared to E2.

### Comparative Example 3 (CE3)

A homopolymer was produced in a first reactor to obtain a low molecular weight portion before transferring the polymer to a hydrogen removal unit. Reactant mixture was introduced into the hydrogen removal unit to separate the unreacted mixture from the polymer. Hydrogen residual was removed to an extend of 97.9% by weight when hydrogen removal unit was operated at pressure of 150 kPa. The low molecular weight polymer was then transferred to a second reactor to produce a first high molecular weight polymer. In the second reactor, a copolymerization was carried out by feeding 1-butene as a comonomer. Finally, in-situ bimodal copolymer from second reactor was transferred to a third reactor to create a second high molecular weight copolymer portion. Characteristic properties of this multimodal polymers is shown in Table 2. A significant improvement in Charpy impact at room temperature could be obtained by decreasing a density of final polymer when co-polymer was produced in both the second and the third reactor.

### Example 3 (E3) (not in accordance with the invention)

Example 3 was carried out in the same manner as Comparative Example 3 except that the hydrogen removal unit was operated at pressure of 105 kPa. The residual of hydrogen from first reactor was removed to an extend of 98.8% by weight. The polymer obtained by this process operation had a melt flow rate of 0.195 g/10min (5kg loading) lower than such value obtained from CE3. As seen in Table 2, it revealed an improvement of stiffness-impact balance when the percentage of removed hydrogen residual increases compared with the properties of Comparative Example 3.

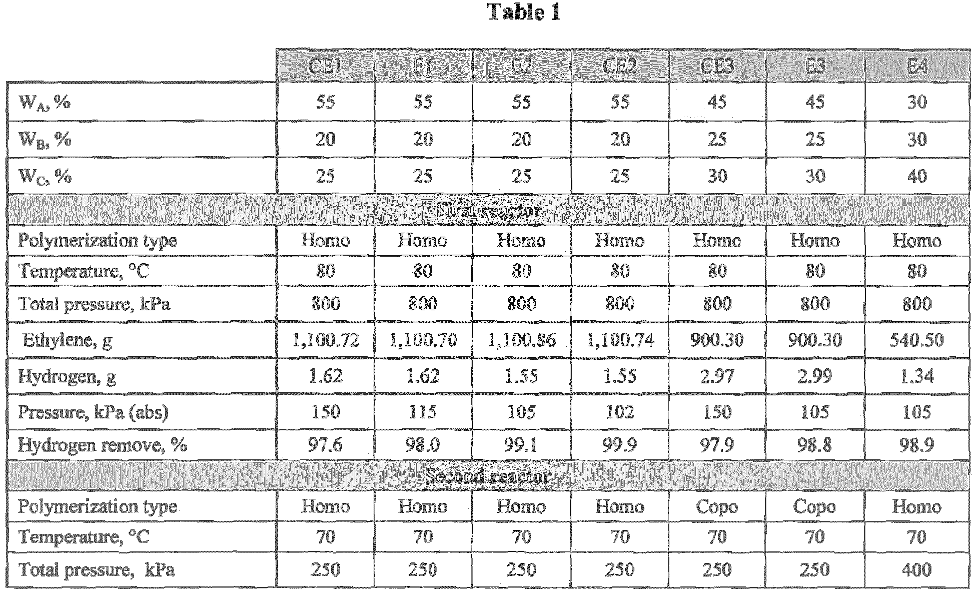

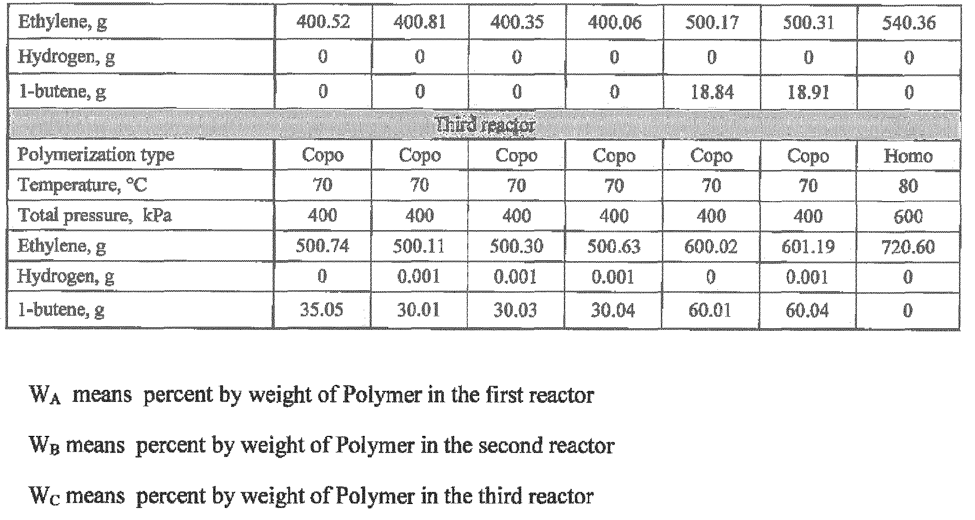

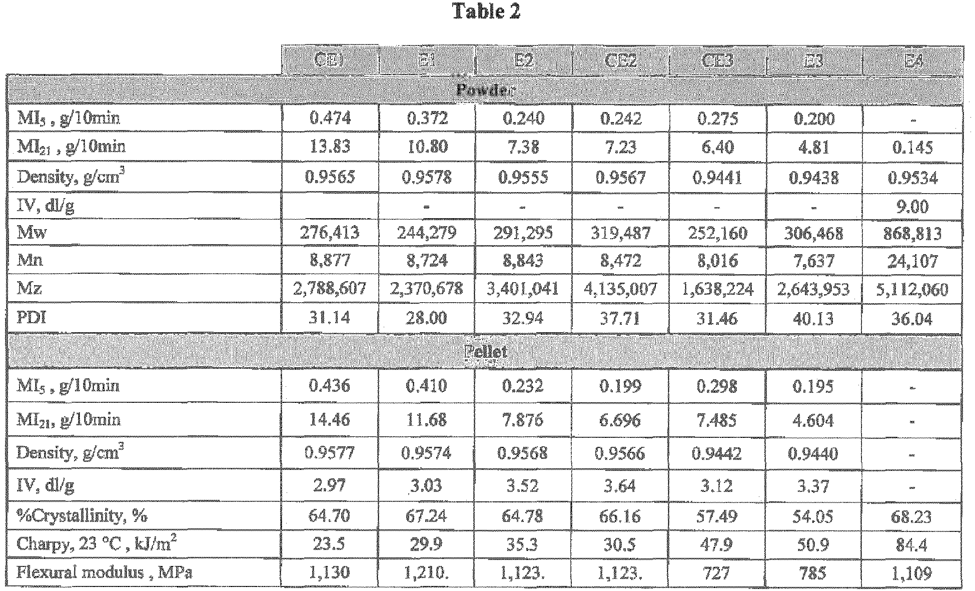

### Film related examples

To prepare an inventive film from the above compositions, it was found that a sub-range of multimodal polyethylene compositions which might be obtained using the inventive reactor system are particularly preferred. In detail, the compositions suitable to form the inventive film are as follows and have the following properties. The following comparative examples refer to the film related compositions.

The inventive example E5 was produced follow the inventive process to make the multimodal polyethylene composition as shown in table 3. The specific multimodal polyethylene compositions enhance superior properties of film in particular the ability to make thin film. The thin film is represented the low thickness of the film such as 5 micron. It could be also refer to the ability to down-gauge the film thickness with equivalent properties to conventional film thickness.

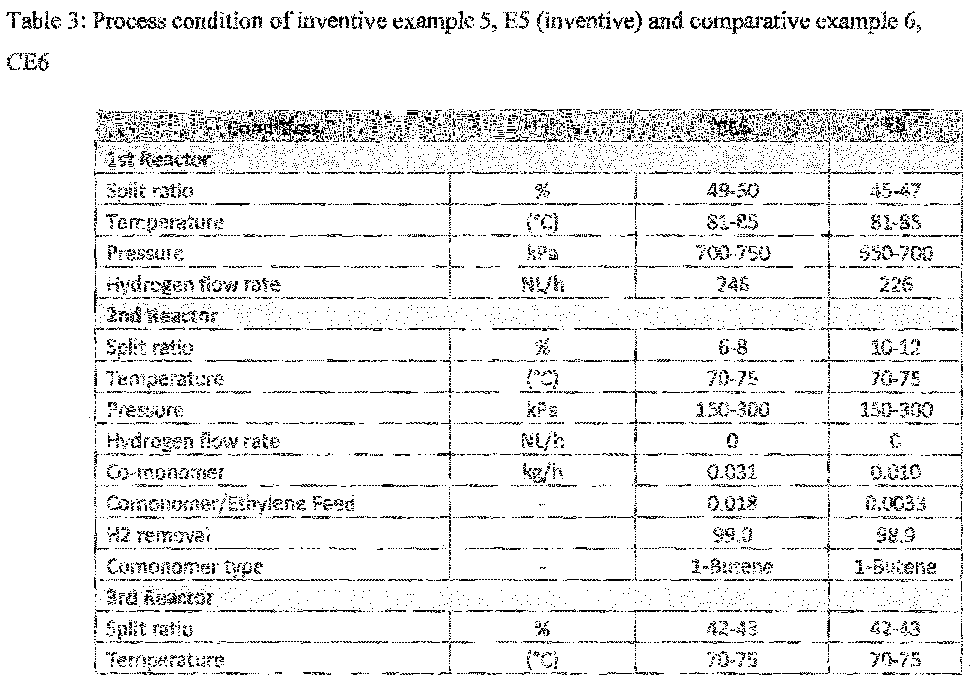

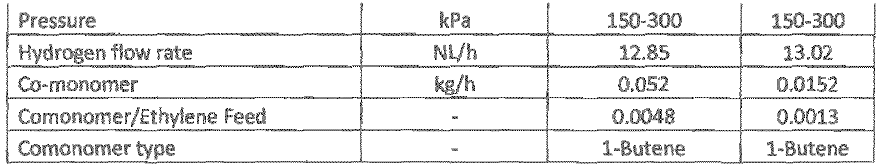

The comparative example 4 (CE4) is the commercial resin EL-Lene™ H5604F with MI₂ of 0.03 g/10min and density of 0.9567 g/cm³. It is the bimodal polyethylene produced in slurry cascade process.

The comparative example 5 (CE5) is the blend of CE4 with commercial resin LLDPE, Dow™ Butene 1211, with MI₂ of 1.0 g/10min and density of 0.9180 g/cm³.It is the practical way in film production to get better film strength in particular dart drop impact and tear strength.

The comparative example 6 (CE6) is the multimodal polyethylene composition produced by the inventive process and having the composition and molecular weight distribution out of the specific range of composition for thin film.

From the molding composition so prepared, a film was produced in the following way. The films having different thickness and output were prepared on the internal blown film machine comprising a single screw extruder connecting with tubular blow film apparatus. The temperature setting from extruder to the die is from 175 to 205 °C. The screw speed and nip roll take up speed to prepare different film thickness in each experiment is defined in table 4. The film was produced at a blow-up ratio of 4:1 and a neck height of 30 cm with bubble diameter of 23 cm and film lay flat of 39 cm.

**Table 4 : Experiment and conditions for film preparation**

| **Blown film parameter** | **Experiment 1 (Ex.1)** | **Experiment 2 (Ex.2)** | **Experiment 3 (Ex.3)** |
|---|---|---|---|
| Film thickness | 12 | 5 | 5 |
| Screw speed (rpm) | 85 | 85 | 60 |
| Nip roll take up speed (rpm) | 80 | 150 | 95 |
| BUR | 4:1 | 4:1 | 4:1 |
| Neck height (cm) | 30 | 30 | 30 |

The films were further evaluated for processability and mechanical properties in both machine direction, MD and transverse direction, TD as shown in table5.

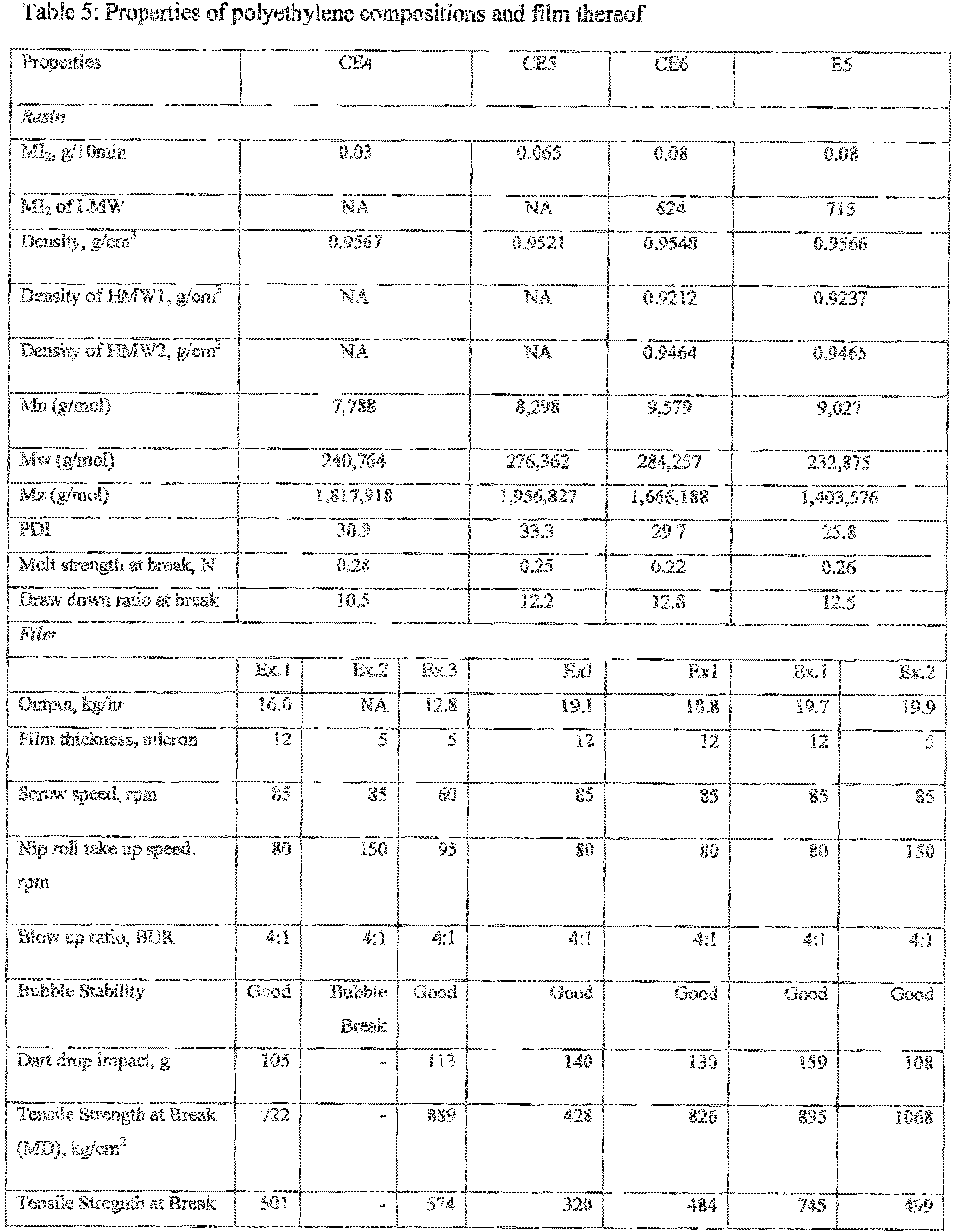

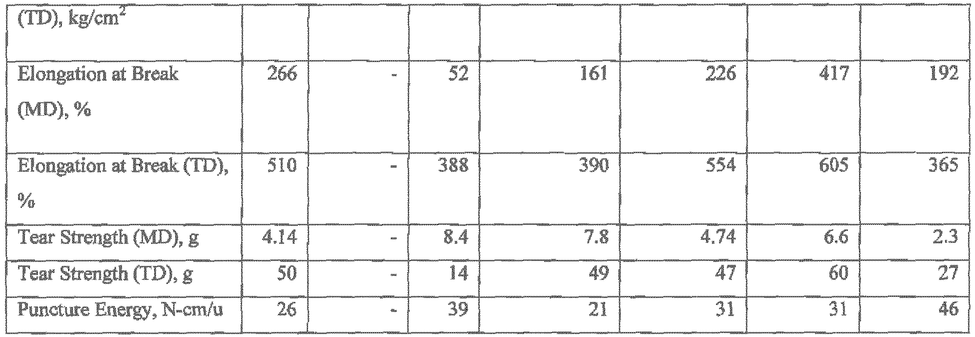

The inventive example 5, E5 shows superior properties of 12 micron film prepared by the same conditions compared to comparative examples, CE4, CE5 and CE6. In particular dart drop impact strength, tensile strength of film in both directions and puncture resistance. Also the film is produced with higher output.

Further experiment to make a thin film at 5 micron was performed in Experiment 2. The Inventive example E5 show better draw ability at higher output which can be easily drawn into 5 micron film with good bubble stability and good mechanical strength. The same experiment was applied to the comparative example CE4 however bubble break was suddenly found. It was possible to make the 5 micron film with CE4 only in the case of lowering output by reducing screw speed and nip roll take up speed as done in Experiment 3. This is also related to draw down at break measured by rheoten. The inventive example1 E5 has higher draw down at break compared to comparative example CE4.

Moreover the properties of the 5 micron film made by inventive example E5 in Experiment 2 are also equivalent to 12 micron film made by CE4with Experiment 1 in particular dart drop impact strength, tensile strength at break and puncture resistance. This also indicated the ability to downgauge the film thickness without sacrifice of mechanical properties. It was also possible to obtain good mechanical properties without use of LLDPE as compared to comparative example CE5.

These results support that the inventive multimodal polyethylene composition provide better balance of mechanical strength with high output for thin film preparation.

## Claims

1. A multimodal polyethylene composition obtainable by a process for producing a multimodal polyethylene composition comprising;
(a) polymerizing ethylene in the absence of comonomer in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene homopolymer, having a weight average molecular weight (Mw) of 20.000 to 90.000 g/mol, having a density of ≥ 0.965 g/cm³, having a MI₂ according to ASTM D 1238 of 500 to 1.000 g/10 min, or medium molecular weight polyethylene homopolymer, having a weight average molecular weight (Mw) of more than 90.000 to 150.000 g/mol, having a density of ≥ 0.965 g/cm³, having a MI₂ according to ASTM D1238 from 0.1 to 10 g/10 min,
(b) removing in the hydrogen removal unit 98.0 to 99.8% by weight of the hydrogen comprised in a slurry mixture obtained from the first reactor at a pressure in the range of 103-145 kPa (abs) and transferring the obtained residual mixture to the second reactor;
(c) polymerizing ethylene and optionally C₄ to C₁₂ α-olefin comonomer in the second reactor in the presence of a catalyst system, selected from Ziegler-Natta catalyst or metallocene, and in the presence of hydrogen in an amount obtained in step (b) to obtain a first high molecular weight polyethylene, having a weight average molecular weight (Mw) of more than 150.000 to 1.000.000 g/mol, or a first ultra high molecular weight polyethylene, having a weight average molecular weight (Mw) of more than 1.000.000 to 5.000.000 g/mol, in the form of a homopolymer or a copolymer and transferring a resultant mixture to the third reactor; and
(d) polymerizing ethylene, and optionally C₄ to C₁₂ α-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 0.1-60% by mol with respect to the total gas present in the vapor phase in the third reactor or optionally substantial absence of hydrogen to obtain a second high molecular weight polyethylene, having a weight average molecular weight (Mw) of more than 150.000 to 1.000.000 g/mol, or a second ultra high molecular weight polyethylene, having a weight average molecular weight (Mw) of more than 1.000.000 to 5.000.000 g/mol, in the form of a homopolymer or copolymer,
in a reactor system for a multimodal polyethylene polymerization process, comprising;
(1) a first reactor, wherein the temperature in the first reactor ranges from 65 to 90°C and the first reactor is operated at a pressure between 250 and 900 kPa;
(2) a hydrogen removal unit arranged between the first reactor and a second reactor comprising at least one vessel connected with a depressurization equipment, preferably selected from vacuum pump, compressor, blower, ejector or a combination thereof, the depressurization equipment allowing to adjust an operating pressure to a pressure in a range of 100 - 200 kPa (abs);
(3) the second reactor; and
(4) a third reactor,
the multimodal polyethylene composition comprising;
(A) 40 to 65 percent by weight, preferably 43 to 52 percent by weight, most preferred 44 to 50 percent by weight, of the low molecular weight polyethylene, the low molecular weight polyethylene;
(B) 8 to 20 percent by weight, preferably 10 to 18 percent by weight, most preferred 10 to 15 percent by weight, of the first high molecular weight polyethylene or the first ultra high molecular weight polyethylene; and
(C) 30 to 50 percent by weight, preferably 37 to 47 percent by weight, most preferred 39 to 45 percent by weight, of the second high molecular weight polyethylene or the second ultra high molecular weight polyethylene, wherein
the density of the first high molecular weight polyethylene or the first ultra high molecular weight polyethylene and the second high molecular weight polyethylene or the second ultra high molecular weight polyethylene are in the range from 0.920 to 0.950 g/cm³, and
wherein the molecular weight distribution of the multimodal polyethylene composition is from 20 to 28, preferably from 24 to 28, measured by gel permeation chromatography.

2. The multimodal polyethylene composition according to claim 1, wherein the depressurization equipment allows to adjust the operating pressure in the hydrogen removal unit to a pressure in the range of 103-145 kPa (abs), preferably 104-130 kPa (abs), most preferably 105 to 115 kPa (abs).

3. The multimodal polyethylene composition according to claim 1 or 2, wherein the hydrogen removal unit further contains a stripping column for the separation of hydrogen and a liquid diluent.

4. The multimodal polyethylene composition according to any of the preceding claims, wherein the removing is removing of 98.0-99.8% by weight of the hydrogen, more preferable 98.0-99.5% by weight, and most preferred 98.0 to 99.1 % by weight.

5. The multimodal polyethylene composition according to any of the preceding claims, wherein the operation pressure in the hydrogen removal unit is in the range of 103-145kPa(abs), more preferably 104-130kPa (abs), and most preferred 105 to 115 kPa (abs).

6. The multimodal polyethylene composition according to claim any of the preceding claims, wherein the multimodal polyethylene composition has a weight average molecular weight from 150,000 to 400,000 g/mol, preferably from 200,000 to 350,000 g/mol, measured by Gel Permeation Chromatography.

7. The multimodal polyethylene composition according to claim any of the preceding claims, wherein the multimodal polyethylene composition has a number average molecular weight from 5,000 to 15,000 g/mol, preferably 7,000 to 12,000 g/mol, measured by Gel Permeation Chromatography.

8. The multimodal polyethylene composition according to any of the claims any of the preceding claims, wherein the multimodal polyethylene composition has a Z average molecular weight from 1,000,000 to 3,000,000 g/mol, preferably from 1,000,000 to 2,500,000 g/mol, measured by Gel Permeation Chromatography.

9. The polyethylene composition according to any of the preceding claims wherein the multimodal polyethylene composition has a density from 0.950 to 0.962 g/cm³, preferably from 0.953 to 0.959 g/cm³, according to ASTM D 1505, and/or MI₂ from 0.03 to 0.15 g/10 min preferably from 0.03 to 0.10 g/10 min.

10. Film comprising the multimodal polyethylene composition according to any of the preceding claims, wherein the film has a thickness from 4 to 40 µm, preferably from 4 to 30 µm, and most preferably 4 to 20 µm.

## Patentansprüche

1. Multimodale Polyethylenzusammensetzung, erhältlich durch ein Verfahren zum Herstellen einer multimodalen Polyethylenzusammensetzung umfassend
(a) Polymerisieren von Ethylen in der Abwesenheit eines Comonomers in einem inerten Kohlenwasserstoffmedium in dem ersten Reaktor in der Gegenwart eines Katalysatorsystems, ausgewählt aus Ziegler-Natta-Katalysator oder Metallocen, und Wasserstoff in einer Menge von 0,1 bis 95 Mol%, bezogen auf das gesamte Gas, das in der Gasphase in dem ersten Reaktor vorhanden ist, um ein Polyethylen mit niedrigem Molekulargewicht mit einem Gewichtsmittel des Molekulargewichts (Mw) von 20.000 bis 90.000 g/mol, mit einer Dichte von ≥0,965 g/cm³ und mit einem MI₂ von 500 bis 1.000 g/10 min gemäß ASTM D 1238, oder ein Polyethylen mit mittlerem Molekulargewicht mit einem Gewichtsmittel des Molekulargewichts (Mw) von mehr als 90.000 bis 150.000 g/mol, mit einer Dichte von ≥0,965 g/cm³ und mit einem MI₂ von 0,1 bis 10 g/10 min gemäß ASTM D 1238 zu erhalten;
(b) Entfernen von 98,0 bis 99,8 Gew.-% des Wasserstoffs, der in einem Aufschlämmungsgemisch, das im ersten Reaktor erhalten wird, vorhanden ist bei einem Druck in dem Bereich von 103-145 kPa (abs) und Überführen des erhaltenen verbleibenden Gemischs in den zweiten Reaktor;
(c) Polymerisieren von Ethylen und optional C₄-C₁₂-α-Olefincomonomer in dem zweiten Reaktor in Gegenwart eines Katalysatorsystems, ausgewählt aus Ziegler-Natta-Katalysator oder Metallocen, und in der Gegenwart von Wasserstoff in einer Menge, erhalten in Schritt (b), um ein erstes Polyethylen mit hohem Molekulargewicht mit einem Gewichtsmittel des Molekulargewichts (Mw) von mehr als 150.000 bis 1.000.000 g/mol oder ein erstes Polyethylens mit ultrahohem Molekulargewicht mit einem Gewichtsmittel des Molekulargewichts (Mw) von mehr als 1.000.000 bis 5.000.000 g/mol in der Form eines Homopolymers oder eines Copolymers zu erhalten, und Überführen eines resultierenden Gemischs in den dritten Reaktor; und
(d) Polymerisieren von Ethylen und optional C₄-C₁₂-α-Olefincomonomer in dem dritten Reaktor in der Gegenwart eines Katalysatorsystems, ausgewählt aus Ziegler-Natta-Katalysator oder Metallocen, und Wasserstoff, wobei die Menge an Wasserstoff in dem dritten Reaktor in einem Bereich von 0,1 bis 70 mol%, vorzugsweise 0,1 bis 60 mol%, ist, bezogen auf das gesamte Gas, das in der Gasphase des dritten Reaktors vorhanden ist, oder optional in in wesentlicher Abwesenheit von Wasserstoff, um ein zweites Polyethylen mit hohem Molekulargewicht mit einem Gewichtsmittel des Molekulargewichts (Mw) von mehr als 150.000 bis 1.000.000 g/mol oder ein zweites Polyethylen mit ultrahohem Molekulargewicht mit einem Gewichtsmittel des Molekulargewichts von (Mw) von mehr als 1.000.000 bis 5.000.000 g/mol in der Form eines Homoolymers oder Copolymers zu erhalten,
in einem Reaktorsystem für ein Verfahren zur Polymerisation eines multimodalen Polyethylens, umfassend:
(1) einen ersten Reaktor, wobei die Temperatur in dem ersten Reaktor in einem Bereich von 65-90 °C ist und der erste Reaktor bei einem Druck zwischen 250 und 900 kPa betrieben wird;
(2) eine Einheit zum Entfernen von Wasserstoff, die zwischen dem ersten Reaktor und einem zweiten Reaktor angeordnet ist, umfassend zumindest einen Behälter, der mit Mitteln zum Reduzieren des Drucks verbunden ist, vorzugsweise ausgewählt aus einer Vakuumpumpe, einem Kompressor, einem Gebläse, einem Ejektor oder einer Kombination davon, wobei es die Mittel zum Reduzieren des Drucks erlauben, einen Betriebsdruck auf einen Druck in einem Bereich von 100 bis 200 kPa (abs) einzustellen;
(3) den zweiten Reaktor; und
(4) einen dritten Reaktor;
die multimodale Polyethylenzusammensetzung, umfassend:
(A) 40 bis 65 Gewichtsprozent, vorzugsweise 43 bis 52 Gewichtsprozent, am meisten bevorzugt 44 bis 50 Gewichtsprozent des Polyethylens mit niedrigem Molekulargewicht;
(B) 8 bis 20 Gewichtsprozent, vorzugsweise 10 bis 18 Gewichtsprozent, am meisten bevorzugt 10 bis 15 Gewichtsprozent des ersten Polyethylens mit hohem Molekulargewicht oder des ersten Polyethylens mit ultrahohem Molekulargewicht; und
(C) 30 bis 50 Gewichtsprozent, vorzugsweise 37 bis 47 Gewichtsprozent, am meisten bevorzugt 39 bis 45 Gewichtsprozent des zweiten Polyethylens mit hohem Molekulargewicht oder des zweiten Polyethylens mit ultrahohem Molekulargewicht, wobei
die Dichte des ersten Polyethylens mit hohem Molekulargewicht oder des ersten Polyethylens mit ultrahohem Molekulargewicht und des zweiten Polyethylens mit hohem Molekulargewicht oder des zweiten Polyethylens mit ultrahohem Molekulargewicht in dem Bereich von 0,920 bis 0,950 g/cm³ sind; und
die Molekulargewichtsverteilung der multimodalen Polyethylenzusammensetzung von 20 bis 28 ist, vorzugsweise von 24 bis 28, gemessen mittels Gelpermeationschromatographie.

2. Multimodale Polyethylenzusammensetzung nach Anspruch 1, wobei die Mittel zum Reduzieren des Drucks das Einstellen des Betriebsdrucks in der Einheit zum Entfernen von Wasserstoff auf einen Druck in dem Bereich von 103 bis 145 kPa (abs), vorzugsweise 104 bis 130 kPa (abs), am meisten bevorzugt 105 bis 115 kPa (abs), erlauben.

3. Multimodale Polyethylenzusammensetzung nach Anspruch 1 oder 2, wobei die Einheit zum Entfernen von Wasserstoff ferner eine Strippkolonne zum Abtrennen von Wasserstoff und einem flüssigen Verdünnungsmittel enthält.

4. Multimodale Polyethylenzusammensetzung nach einem der vorangehenden Ansprüche, wobei das Entfernen das Entfernen von 98,0 bis 99,8 Gew.-% des Wasserstoffs ist, vorzugsweise 98,0 bis 99,5 Gew.-%, am meisten bevorzugt 98,0 bis 99,1 Gew.-%.

5. Multimodale Polyethylenzusammensetzung nach einem der vorangehenden Ansprüche, wobei der Betriebsdruck in der Einheit zum Entfernen von Wasserstoff in einem Bereich von 103 bis 145 kPa (abs), darüber hinaus bevorzugt 104-130 kPa (abs), und am meisten bevorzugt 105 bis 115 kPa (abs), ist.

6. Multimodale Polyethylenzusammensetzung nach einem der vorangehenden Ansprüche, wobei die multimodale Polyethylenzusammensetzung ein Gewichtsmittel des Molekulargewichts von 150.000 bis 400.000 g/mol, vorzugsweise 200.000 bis 350.000 g/mol, gemessen durch Gelpermeationschromatographie, hat.

7. Multimodale Polyethylenzusammensetzung nach einem der vorangehenden Ansprüche, wobei die multimodale Polyethylenzusammensetzung ein Zahlenmittel des Molekulargewichts von 5.000 bis 15.000 g/mol, vorzugsweise 7.000 bis 12.000 g/mol, gemessen durch Gelpermeationschromatographie, hat.

8. Multimodale Polyethylenzusammensetzung nach einem der vorangehenden Ansprüche, wobei die multimodale Polyethylenzusammensetzung ein Z-Mittel des Molekulargewichts von 1.000.000 bis 3.000.000 g/mol, vorzugsweise 1.000.000 bis 2.500.000 g/mol, gemessen durch Gelpermeationschromatographie, hat.

9. Polyethylenzusammensetzung nach einem der vorangehenden Ansprüche, wobei die multimodale Polyethylenzusammensetzung eine Dichte von 0,950 bis 0.962 g/cm³, vorzugsweise 0,953 bis 0,959 g/cm³ gemäß ASTM D 1505 und/oder MI₂ von 0,03 bis 0,15 g/10 min, vorzugsweise 0,03 bis 0,10 g/10 min, hat.

10. Film, umfassend die multimodale Polyethylenzusammensetzung nach einem der vorangehenden Ansprüche, wobei der Film eine Dicke von 4 bis 40 µm, vorzugsweise von 4 bis 30 µm, am meisten bevorzugt 4 bis 20 µm, hat.

## Revendications

1. Composition de polyéthylène multimodal pouvant être obtenue par un procédé prévu pour la production d'une composition de polyéthylène multimodal comprenant les étapes consistant à :
(a) polymériser de l'éthylène en l'absence de comonomère dans un milieu d'hydrocarbure inerte dans le premier réacteur en présence d'un système catalytique, sélectionné parmi un catalyseur Ziegler-Natta ou métallocène, et de l'hydrogène en une quantité de 0,1 à 95 % par mol par rapport à la totalité du gaz présent dans la phase vapeur dans le premier réacteur de manière à obtenir un homopolymère de polyéthylène de faible poids moléculaire, ayant un poids moléculaire moyen en poids (Mw) situé dans la plage de 20,000 à 90,000 g/mol, ayant une densité ≥ 0,965 g/cm³, ayant un indice de fluidité (MI₂) selon la norme 1238 de l'ASTM de 500 à 1,000 g/10 min, ou un polyéthylène de poids moléculaire moyen, ayant un poids moléculaire moyen en poids (Mw) supérieur à 90,000 à 150,000 g/mol, ayant une densité ≥ 0,965 g/cm, ayant un MI₂ selon la norme D1238 de l'ASTM allant de 0,1 à 10 g/10 minutes,
(b) éliminer dans l'unité d'extraction de l'hydrogène 98,0 à 99,8 % en poids de l'hydrogène compris dans un mélange de suspension épaisse obtenu du premier réacteur à une pression comprise dans la plage de 103 à 145 kPa (abs) et transférer la mélange résiduel obtenu dans le deuxième réacteur ;
(c) polymériser l'éthylène et facultativement le comonomère d'α-oléfine en C₄ à C₁₂ dans le deuxième réacteur en présence d'un système catalytique, sélectionné parmi un catalyseur Ziegler-Natta ou métallocène, et en présence d'hydrogène en une quantité obtenue à l'étape (b) de manière à obtenir un premier polyéthylène de poids moléculaire élevé, ayant un poids moléculaire moyen en poids (Mw) supérieur à 150,000 à 1,000,000 g/mol, ou un premier polyéthylène de poids moléculaire ultra élevé, ayant un poids moléculaire moyen en poids (Mw) supérieur à la plage allant de 1,000,000 à 5,000,000 g/mol, sous la forme d'un homopolymère ou d'un copolymère et transférer un mélange résultant au troisième réacteur ; et
(d) polymériser l'éthylène, et facultativement le comonomère d'a-oléfine en C₄ à C₁₂ dans le troisième réacteur en présence d'un système catalytique, sélectionné parmi un catalyseur Ziegler-Natta ou métallocène, et l'hydrogène, dans lequel la quantité d'hydrogène présente dans le troisième réacteur se situe dans la plage de 0,1 à 70 % par mol, préférablement de 0,1 à 60 % par mol par rapport à la totalité du gaz présent dans la phase vapeur dans le troisième réacteur ou facultativement en l'absence substantielle d'hydrogène de manière à obtenir un deuxième polyéthylène de poids moléculaire élevé, ayant un poids moléculaire moyen en poids (Mw) supérieur à 150,000 à 1,000,000 g/mol, ou un deuxième polyéthylène de poids moléculaire ultra élevé, ayant un poids moléculaire moyen en poids (Mw) supérieur à la plage allant de 1,000,000 à 5,000,000 g/mol, sous la forme d'un homopolymère ou d'un copolymère, dans un système réacteur destiné à un processus de polymérisation du polyéthylène multimodal, comprenant :
(1) un premier réacteur, dans lequel la température dans le premier réacteur se situe dans la plage de 65 à 90 °C et le premier réacteur fonctionne à une pression comprise entre 250 et 900 kPa ;
(2) une unité d'élimination de l'hydrogène placée entre le premier réacteur et un deuxième réacteur comprenant au moins un réservoir raccordé à un équipement de dépressurisation, sélectionné de préférence parmi une pompe sous vide, un compresseur, un souffleur, un éjecteur ou une combinaison de ceux-ci, l'équipement de dépressurisation permettant de régler une pression de fonctionnement à une pression se situant dans une plage de 100 à 200 kPa (abs) ;
(3) le deuxième réacteur ; et
(4) un troisième réacteur,
la composition de polyéthylène multimodal comprenant :
(A) 40 à 65 pourcent en poids, préférablement 43 à 52 pourcent en poids, plus préférablement 44 à 50 pourcent en poids, du polyéthylène de faible poids moléculaire ;
(B) 8 à 20 pourcent en poids, préférablement 10 à 18 pourcent en poids, plus préférablement 10 à 15 pourcent en poids, du premier polyéthylène à poids moléculaire élevé ou du premier polyéthylène à poids moléculaire ultra élevé ; et
(C) 30 à 50 pourcent en poids, préférablement 37 à 47 pourcent en poids, plus préférablement 39 à 45 pourcent en poids, du deuxième polyéthylène à poids moléculaire élevé ou du deuxième polyéthylène à poids moléculaire ultra élevé, dans lequel
les densités du premier polyéthylène à poids moléculaire élevé ou du premier polyéthylène à poids moléculaire ultra élevé et du deuxième polyéthylène à poids moléculaire élevé ou du deuxième premier polyéthylène à poids moléculaire ultra élevé se situent dans la plage de 0,920 à 0,950 g/cm³, et
dans lequel la distribution des poids moléculaires de la composition de polyéthylène multimodal va de 20 à 28, préférablement de 24 à 28, mesurée par chromatographie par perméation de gel.

2. Composition de polyéthylène multimodal selon la revendication 1, dans laquelle l'équipement de dépressurisation permet d'ajuster la pression de fonctionnement dans l'unité d'élimination de l'hydrogène dans la plage de 103 à 145 kPa (abs), de préférence dans la plage de 104 à 130 kPa (abs), plus préférablement dans la plage de 105 à 115 kPa (abs).

3. Composition de polyéthylène multimodal selon la revendication 1 ou la revendication 2, dans laquelle l'unité d'élimination de l'hydrogène contient en outre une colonne de stripage pour la séparation de l'hydrogène et un diluant liquide.

4. Composition de polyéthylène multimodal selon l'une quelconque des revendications précédentes, dans laquelle l'extraction élimine 98,0 à 99,8 % en poids de l'hydrogène, plus préférablement 98,0 à 99,5 % en poids, et plus préférablement encore 98,0 à 99,1 % en poids.

5. Composition de polyéthylène multimodal selon l'une quelconque des revendications précédentes, dans laquelle la pression de fonctionnement dans l'unité d'élimination de l'hydrogène se situe dans la plage de 103 à 145 kPa (abs), plus préférablement dans la plage de 104 à 130 kPa (abs) et plus préférablement encore dans la plage de 105 à 115 kPa (abs).

6. Composition de polyéthylène multimodal selon l'une quelconque des revendications précédentes, dans laquelle la composition de polyéthylène multimodal a un poids moléculaire moyen en poids de 150.000 à 400.000 g/mol, préférablement 200,000 à 350,000 g/mol, mesuré par chromatographie par perméation de gel.

7. Composition de polyéthylène multimodal selon l'une quelconque des revendications précédentes, la composition de polyéthylène multimodal ayant un poids moléculaire moyen en nombre allant de 5.000 à 15.000 g/mol, préférablement de 7.000 à 12.000 g/mol, mesuré par chromatographie par perméation de gel.

8. Composition de polyéthylène multimodal selon l'une quelconque des revendications précédentes, la composition de polyéthylène multimodal ayant un poids moléculaire moyen Z allant de 1.000.000 à 3.000.000 g/mol, préférablement allant de 1.000.000 à 2.500.000 g/mol, m mesuré par chromatographie par perméation de gel.

9. Composition de polyéthylène multimodal selon l'une quelconque des revendications précédentes, la composition de polyéthylène multimodal ayant une densité allant de 0,950 à 0,962 g/cm³, préférablement allant de 0,953 à 0,959 g/cm³, selon la norme 1505 de l'ASTM, et/ou un MI₂ allant de 0,03 à 0,15 g/10 min préférablement allant de 0,03 à 0,10 g/10 min.

10. Film comprenant la composition de polyéthylène multimodal selon l'une quelconque des revendications précédentes, dans lequel le film a une épaisseur allant de 4 à 40 µm, préférablement allant de 4 à 30 µm, et plus préférablement de 4 à 20 µm.
